# EUROPEAN PATENT SPECIFICATION

(11) **EP 3 845 769 B1**
(45) Date of publication and mention of the grant of the patent: **04.10.2023**
(21) Application number: 19856000.5
(22) Date of filing: 27.08.2019
(51) Int. Cl.: F16C 23/08, F16C 19/38, F16C 33/58, F16C 33/66, F16C 33/36, F16C 33/62

(54) **DOUBLE-ROW SELF-ALIGNING ROLLER BEARING AND MAIN SHAFT SUPPORT DEVICE FOR WIND GENERATION EQUIPPED WITH SAME**
ZWEIREIHIGES SELBSTAUSRICHTENDES ROLLENLAGER UND DAMIT AUSGESTATTETE HAUPTWELLENSTÜTZVORRICHTUNG ZUR WINDERZEUGUNG
PALIER À ROULEAUX À ALIGNEMENT AUTOMATIQUE À DOUBLE RANGÉE ET DISPOSITIF DE SUPPORT D'ARBRE PRINCIPAL POUR PRODUCTION ÉOLIENNE ÉQUIPÉ DE CE DERNIER

(30) Priority: 29.08.2018 JP 2018160216
(43) Date of publication of application: 07.07.2021
(73) Proprietor: NTN Corporation, Osaka-shi, Osaka 550-0003 (JP)
(72) Inventor: NAKANISHI, Masaki, Kuwana-shi, Mie 511-0867 (JP); MIKAMI, Hidenobu, Kuwana-shi, Mie 511-0867 (JP)
(74) Representative: Marks & Clerk LLP
(86) International application number: PCT/JP2019/033572
(87) International publication number: WO 2020/045455

(56) References cited:
- EP-A1- 2 759 620
- WO-A1-2014/003172
- JP-A- 2000 178 738
- JP-A- 2013 079 721
- JP-A- 2014 122 415
- JP-A- 2018 115 762
- JP-A- 2018 115 762

## Description

### TECHNICAL FIELD

The present invention relates to a double-row self-aligning roller bearing applied to a usage to which a high load is applied, for example a bearing that supports a rotor shaft of a wind power generator, and a wind power generation rotor shaft support device having the double-row self-aligning roller bearing. In particular, the present invention relates to a double-row self-aligning roller bearing having a surface on which a hard film including a diamond-like carbon is formed, and a wind power generation rotor shaft support device having the double-row self-aligning roller bearing.

### BACKGROUND ART

A hard carbon film is a hard film generally called diamond-like carbon (hereinafter, referred to as DLC. A film or a layer mainly formed of DLC is also called a DLC film or a DLC layer) . Various names are given to the hard carbon. For example, it is called hard amorphous carbon, amorphous carbon, hard amorphous-type carbon, i-carbon, and diamond-shaped carbon. These terminologies are not clearly distinguished from one another.

As the essential quality of the DLC for which the above-described terminologies are used, the DLC has a structure in which diamond and graphite are mixed with each other and thus its structure is intermediate between that of the diamond and that of the graphite. The DLC has high hardness almost equal to that of the diamond and is excellent in its wear resistance, solid lubricating property, thermal conductivity, chemical stability, and corrosion resistance. Therefore the DLC has been utilized as protection films of dies, tools, wear-resistant mechanical parts, abrasive materials, sliding members, magnetic and optical parts. As methods of forming the DLC film, a physical vapor deposition (hereinafter, referred to as PVD) method such as a sputtering method and an ion plating method; a chemical vapor deposition (hereinafter, referred to as CVD) method; and an unbalanced magnetron sputtering (hereinafter, referred to as UBMS) method are adopted.

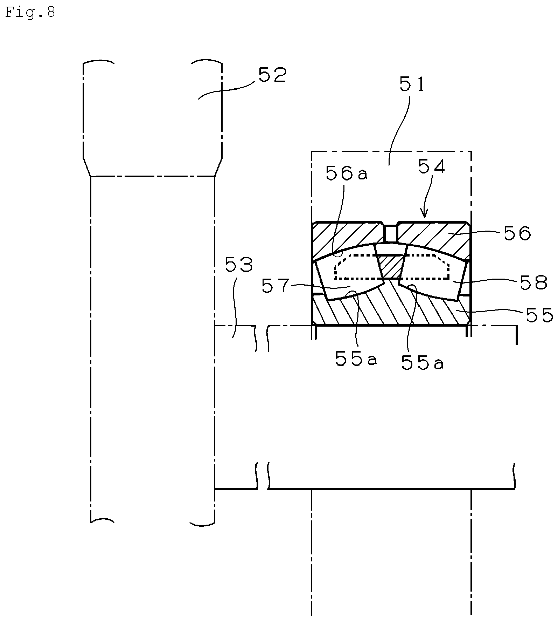

A large double-row self-aligning roller bearing 54 as shown in Fig. 8 is likely used as a rotor shaft bearing in a large wind power generator. A rotor shaft 53 to which a blade 52 is mounted is rotated by receiving wind power. The rotation speed of the rotor shaft 53 is accelerated using a speed increaser (not shown) to rotate a generator so that electricity is generated. When generating electricity while receiving wind, the rotor shaft 53 that supports the blade 52 receives an axial load (bearing thrust load) and a radial load (bearing radial load) due to the wind power applied to the blade 52. The double-row self-aligning roller bearing 54 can receive the radial load and the thrust load at the same time and have aligning performance, and thereby the double-row self-aligning roller bearing 54 can absorb an incline of the rotor shaft 53 caused by an accuracy error or a mount error of a bearing housing 51, and absorb the deformation of the rotor shaft 53 in operating. Thus, the double-row self-aligning roller bearing 54 is used as it is suitable to the wind power generation rotor shaft bearing (for example, Non Patent Document 1).

Attempts are made to form the DLC film on raceway surfaces of bearing rings of a rolling bearing, rolling contact surfaces of rolling elements thereof, sliding contact surface of a cage thereof. Extremely large internal stress is generated when the DLC film is formed. Although the DLC film has high hardness and high Young's modulus, the DLC film has extremely small deformability. Thus, the DLC film has disadvantages that it is low in its adhesiveness to a base material and liable to peel therefrom. Thus, in forming the DLC film on the above-described surfaces of the bearing components of the rolling bearing, it is necessary to improve its adhesiveness to the surfaces of the bearing components.

For example, in order to improve the adhesiveness of the DLC film to the base material by disposing an intermediate layer, a rolling device in which a foundation layer that contains any one or more elements selected from among chromium (hereinafter, referred to as Cr), tungsten (hereinafter, referred to as W), titanium (hereinafter, referred to as Ti), silicon (hereinafter, referred to as Si), nickel, and iron as its composition; an intermediate layer that is formed on the foundation layer and contains the same constituent elements as those of the foundation layer and carbon such that the content rate of the carbon is larger at the side opposite to the foundation layer than at the side of the foundation layer; and a DLC layer that is formed on the intermediate layer and contains argon and carbon such that the content rate of the argon is not less than 0.02 mass% nor more than 5 mass%, has been proposed (see Patent Document 1).

In order to improve the adhesiveness of the DLC film to the base material by an anchoring effect, a rolling bearing in which unevenness of which height is 10-100 nm and average width is not more than 300 nm are formed on a raceway surface by means of ion bombardment process and the DLC film is formed on the raceway surface, has been proposed (see Patent Document 2).

### PRIOR ART DOCUMENTS

### PATENT DOCUMENTS

Patent Document 1: Japanese Patent No. 4178826
Patent Document 2: Japanese Patent No. 3961739

### NON PATENT DOCUMENT

Non Patent Document 1: Catalogue of NTN CORPORATION "The New Generation of NTN Bearings for Wind Turbine" A65. CAT. No. 8404/04/JE, May 1, 2003
JP2018115762A discloses a double row self-aligning roller bearing that receives an axial load and a radial load, that is suitable for being used when loads of different magnitudes are applied to two rows of rollers aligned in an axial direction, and that can prevent an unintentional aligning operation when the bearing is assembled or incorporated into the other device. WO2014003172A1 discloses a molded body of a DLC film, said molded body being provided with the DLC film that is formed, via an intermediate layer, on a base material, wherein the intermediate layer comprises tungsten carbide as a main component and has a film thickness of 40-450 nm inclusive. EP2759620A1 discloses a hard film which has high wear resistance and excellent peeling resistance and can be prevented from peeling off a base material over a long period of time.

As shown in Fig. 8, in the double-row self-aligning roller bearing that supports the rotor shaft for the wind power generation, the thrust load is larger than the radial load. Thus, a roller 58 in a row that receives the thrust load among the double-row rollers 57 and 58 mainly receives the radial load and the thrust load at the same time. Accordingly, the rolling fatigue lifetime is made short. Further, since the thrust load is applied, the sliding movement is caused on a flange, and thereby the flange is worn. In addition, since the load in an opposite row is lightened, the roller 57 is slid on raceway surfaces 55a and 56a of an inner ring 55 and an outer ring 56, and thereby damage or wear on a surface of the roller 57 is caused. Thus, a large size bearing is adopted to solve the problems described above, however the capacity at the low load side becomes excessively large, and therefore it is uneconomical. Also, since the wind power generator rotor shaft bearing is operated in an unmanned state or arranged at a high place due to the large size of the blade 52, maintenance-free of the wind power generator rotor shaft bearing is desired.

It is not easy to prevent flaking under a high contact surface pressure caused by a rolling and sliding movement, in particular, it might be more difficult to prevent the flaking under a lubrication operation condition that may cause much stronger shear force due to the sliding friction. The sliding surface to which the DLC film is likely applied in the double-row self-aligning roller bearing, in particular the double-row self-aligning roller bearing that supports the rotor shaft for the wind power generation, is apt to be inferior in lubrication state and thereby sliding is caused, and therefore the operation condition might be severe compared to that of the general rolling bearing.

The techniques disclosed in the above Patent Documents have been proposed to prevent the peeling of the hard film. However, there is room for further improvement of a film structure or a film forming condition in a configuration to which the DLC film is applied in order to satisfy required properties of the obtained rolling bearing depending on the use condition.

An object of the present invention is, in order to solve such a problem, to provide a double-row self-aligning roller bearing and a wind power generation rotor shaft support device having the double-row self-aligning roller bearing being capable of preventing frictional wear on a lubrication surface even when the double-row self-aligning roller bearing is brought into contact with another member under a condition of an inferior lubrication state causing sliding and being superior in long term durability.

### MEANS FOR SOLVING THE PROBLEM

A double-row self-aligning roller bearing according to the present invention is defined in the appended claim 1. Preferred embodiments are defined in the appended dependent claims.

### EFFECT OF THE INVENTION

The double-row self-aligning roller bearing according to the present invention includes the hard film having a predetermined film structure including the DLC. The hard film is formed on the sliding contact surface of at least one bearing component selected from among the inner ring, the outer ring, and the rollers. An intermediate layer is the mixed layer of WC and DLC (WC/DLC), which has a gradient composition, and thereby the residual stress after the film is formed is hardly concentrated. In addition, the content of hydrogen in the mixed layer is less than 10 atom%. Thus, superior peeling resistance of the hard film can be obtained even when contacting another member under a condition of an inferior lubrication state causing sliding.

With the structure described above, although the hard film is formed on, for example a rolling contact surface of the inner ring raceway surface, the outer ring raceway surface, or the rolling element, the hard film is superior in its peeling resistance and thereby the hard film can show the original properties of DLC. As a result, the double-row self-aligning roller bearing according to the present invention becomes superior in its seizure resistance, wear resistance, and corrosion resistance. Consequently, the damage is hardly caused on the raceway surface or the like even in a severe lubrication state and the lifetime of the double-row self-aligning roller bearing can be made long.

A bearing that supports a rotor shaft for wind power generation is used under a condition of an inferior lubrication state causing sliding. The double-row self-aligning roller bearing according to the present invention supports the rotor shaft to which the blade of the wind power generator is mounted. Thus, superior peeling resistance of the hard film can be obtained under the condition described above, and thereby the lifetime of the bearing can be made long and maintenance-free thereof can be achieved. Further, the inner ring includes the intermediate flange and the small flanges on the outer circumference of the inner ring, and the hard film is formed on one of the small flanges. Thus, the double-row self-aligning roller bearing is suitable to a unique use state for the wind power generator rotor shaft bearing in which a relatively large thrust load is applied to the roller in one of the two rows.

### BRIEF DESCRIPTION OF THE DRAWINGS

Fig. 1 is a schematic view illustrating a whole wind power generator including a wind power generation rotor shaft support device according to the present invention.
Fig. 2 is a view illustrating the wind power generation rotor shaft support device according to the present invention.
Fig. 3 is a schematic cross-sectional view illustrating a double-row self-aligning roller bearing according to the present invention.
Fig. 4 is a schematic cross-sectional view illustrating a structure of a hard film.
Fig. 5 is a schematic view illustrating a film forming principle of a UBMS method.
Fig. 6 is a schematic view illustrating a UBMS device.
Fig. 7 is a schematic view illustrating a two-cylinder test machine.
Fig. 8 is a view illustrating a rotor shaft support bearing in a conventional wind power generator.

### MODE FOR CARRYING OUT THE INVENTION

A hard film such as a DLC film has residual stress therein. The residual stress is largely different depending on an influence of a film structure or a film forming condition. As a result, the peeling resistance is largely affected. Also, the peeling resistance is changed depending on a use condition of the hard film. The prevent inventors conducted a study using a two-cylinder test machine regarding the hard film formed on a surface of a bearing component of a double-row self-aligning roller bearing used under a condition of an inferior lubrication state (boundary lubrication condition) causing rolling and sliding contact. As a result of the study, the present inventors found that the peeling resistance can be improved under the above-described condition by adopting a specific film structure of the hard film and especially by setting a content of hydrogen in a predetermined range. The present invention has been derived from such knowledge.

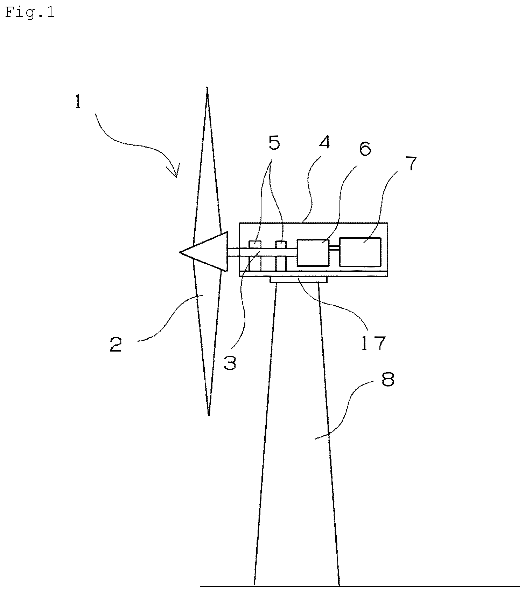

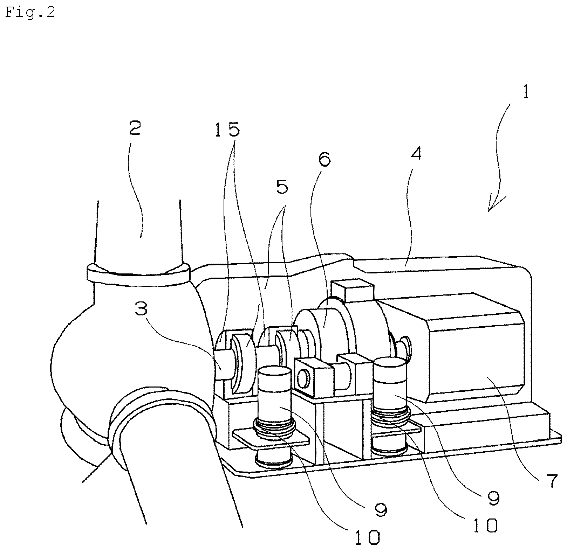

A wind power generation rotor shaft support device according to the present invention will be described with reference to Fig. 1 and Fig. 2. Fig. 1 is a schematic view illustrating a whole of the wind power generator including the wind power generation rotor shaft support device according to the present invention. Fig. 2 is a view illustrating the wind power generation rotor shaft support device shown in Fig. 1. As shown in Fig. 1, in a wind power generator 1, a rotor shaft 3 to which a blade 2 served as a wind turbine is rotatably supported by a double-row self-aligning roller bearing 5 (hereinafter, also merely referred to as a bearing 5) disposed in a nacelle 4, and further a speed increaser 6 and a generator 7 are disposed in the nacelle 4. The speed increaser 6 increases the rotation speed of the rotor shaft 3 and transmits the rotation to an input shaft of the generator 7. The nacelle 4 is disposed on a support base 8 to be allowed to revolve via a revolving seat bearing 17. When a motor 9 for revolving (see Fig. 2) is driven, the nacelle 4 is revolved via a speed reducer 10 (see Fig. 2). The nacelle 4 is revolved to match the direction of the blade 2 with a wind direction. Two bearings 5 for supporting the rotor shaft are disposed in the example shown in Fig. 2, however the number of the bearings 5 may be one.

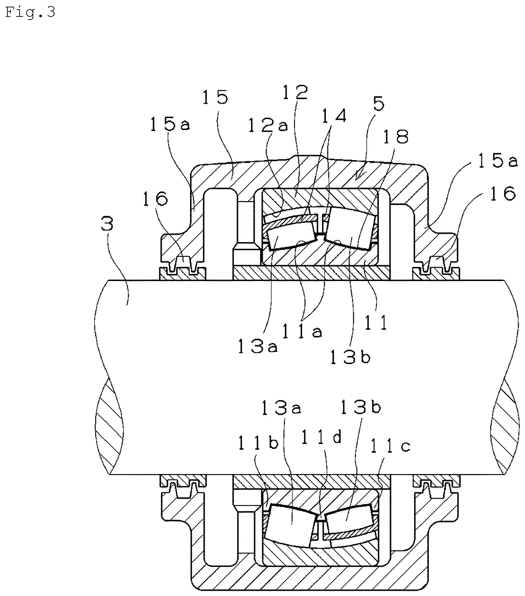

Fig. 3 shows the double-row self-aligning roller bearing 5 that supports the rotor shaft of the wind power generator. The bearing 5 is provided with an inner ring 11 and an outer ring 12 that are served as a pair of raceway rings, and a plurality of rollers 13 interposed between the inner ring 11 and the outer ring 12. The rollers are interposed to be aligned in two rows in an axial direction of the bearing. In Fig. 3, the roller 13a is in a row closer to the blade (left row), and the roller 13b is in a row far away from the blade (right row) . The bearing 5 is a radial bearing that can receive a thrust load. An outer ring raceway surface 12a of the outer ring 12 of the bearing 5 is formed in a spherical shape. Each of the rollers is formed such that an outer circumference is formed in a spherical shape along the outer ring raceway surface 12a. A double-row raceway surface 11a having a section along outer circumferences of the roller 13a and the roller 13b at the left and right rows is formed on the inner ring 11. Small flanges 11b and 11c are disposed at both ends of the outer circumference of the inner ring 11. An intermediate flange 11d is disposed at the center part of the outer circumference of the inner ring 11, namely between the roller 13a in the left row and the roller 13b in the right row. Each of the rollers 13a and 13b is retained in each row by a cage 14.

In the configuration described above, the outer circumference of each of the rollers 13a and 13b is brought into rolling contact with the inner ring raceway surface 11a and the outer ring raceway surface 12a. An inner end surface in the axial direction of the roller 13a is brought into sliding contact with one end surface in the axial direction of the intermediate flange 11d. An outer end surface in the axial direction of the roller 13a is brought into sliding contact with an inner end surface of the small flange 11b. An inner end surface in the axial direction of the roller 13b is brought into sliding contact with the other end surface in the axial direction of the intermediate flange 11d. An outer end surface in the axial direction of the roller 13b is brought into sliding contact with an inner end surface of the small flange 11c. The grease is sealed to reduce these frictions. As the grease, known grease for the rolling bearing can be adopted.

In Fig. 3, the outer ring 12 is disposed to be fitted with an inner diametrical surface of the bearing housing 15, and the inner ring 11 is fitted with an outer circumference of the rotor shaft 3 to support the rotor shaft 3. The bearing housing 15 has side walls 15a that cover both ends of the bearing 5, and a seal 16 such as a labyrinth seal is formed between the side walls 15a and the rotor shaft 3. The bearing 5 without a seal is adopted because the sealing can be obtained in the bearing housing 15. The bearing 5 is served as the wind power generator rotor shaft bearing according to the embodiment of the present invention.

The double-row self-aligning roller bearing according to the present invention has a feature that the hard film having a predetermined structure is formed on the surfaces of the roller and other component that are brought into rolling and sliding contact with each other (in particular, in a boundary lubrication state). Thus, superior peeling resistance of the hard film can be obtained even in contacting with other component in an inferior lubrication state causing sliding. As a result, the original properties of the hard film can be shown, and superior seizure resistance, wear resistance, and corrosion resistance thereof can be obtained. Consequently, the damage of the double-row self-aligning roller bearing caused by metal contact can be prevented.

An area on which the hard film is formed will be described below. In the bearing 5 shown in Fig. 3, a hard film 18 is formed on an outer circumference of the inner ring 11, which is a bearing component. The outer circumference of the inner ring 11 includes the raceway surface 11a, both end surfaces in the axial direction of the intermediate flange 11d, the inner end surface of the small flange 11b, and the inner end surface of the small flange 11c. In the configuration shown in Fig. 3, the hard film 18 is formed on a whole of the outer circumference of the inner ring 11 and also the hard film 18 is formed on a surface that is not brought into rolling and sliding contact with the rollers 13a and 13b. The area of the inner ring 11 on which the hard film 18 is formed is not limited to the configuration shown in Fig. 3 as long as the hard film 18 is formed on the surface that is brought into sliding contact with the roller in the boundary lubrication state. For example, the hard film may be formed on at least one of the end surface among both end surfaces in the axial direction of the intermediate flange 11d, the inner end surface of the small flange 11b, and the inner end surface of the small flange 11c that are brought into sliding contact with each of the rollers 13a and 13b.

As described above, in the self-aligning roller bearing as the wind power generator rotor shaft bearing, the roller (roller 13b) in a row far away from the blade receives a large thrust load compared to the roller (roller 13a) in a row closer to the blade. In this case, the area brought into sliding contact with the roller 13b is apt to be especially the boundary lubrication. Thus, considering that loads different in magnitude from each other are applied to the rollers in two rows aligned in the axial direction, the hard film may be formed only on the inner end surface of the small flange 11c among the small flanges 11b and 11c.

In the double-row self-aligning roller bearing according to the present invention, the hard film is formed on the surface to be brought into sliding contact (in particular, rolling and sliding contact) with other bearing component in the boundary lubrication state (low lambda condition). The roller causes sliding while rolling between the inner ring and the outer ring. The hard film shown in Fig. 3 is used under such a condition. Further, the area on which the hard film is formed is not limited to the area shown in Fig. 3. Therefore, the hard film may be formed on any surface of at least one bearing component selected from among the inner ring, the outer ring, and the roller that are to be brought into the condition described above.

In the configuration shown in Fig. 3, the hard film 18 is formed on the outer circumference of the inner ring 11, however, instead of this or in addition to this, the hard film 18 may be formed on the surfaces of each of the outer ring 12 and the rollers 13a and 13b. In a configuration in which the hard film is formed on the outer ring 12, it is preferable that the hard film is formed on an inner circumference (including outer ring raceway surface 12a) of the outer ring 12. Further, in a configuration in which the hard film is formed on the surfaces of the rollers 13a and 13b, the hard film may be formed on both end surfaces of each of the rollers 13a and 13b. Further, considering that the difference of loads applied to the rollers, the hard film may be formed on both end surfaces of only the roller 13b. Further, the hard film may be formed on the outer circumference of each of the rollers 13a and 13b. For example, the hard film may be formed on the outer circumference of the roller in at least one of the two rows.

In the double-row self-aligning roller, the inner ring, the outer ring, and the rolling element, which are bearing components on which the hard film is formed, are formed of iron-based material. As an iron-based material, any steel generally used in a bearing component may be adopted. Examples of the iron-based material include high carbon chromium bearing steel, carbon steel, tool steel, and martensitic stainless steel.

In these bearing components, the hardness of each of the surfaces on which the hard film is formed is preferably set to Vickers hardness of Hv 650 or more. By setting the hardness of the surface to Vickers hardness of Hv 650 or more, a difference between the hardness of the surface and that of the hard film (foundation layer) can be decreased and the adhesiveness to the hard film can be improved.

It is preferable that a nitrided layer is formed by means of nitriding treatment, on the surface on which the hard film is to be formed, before the hard film is formed on the surface. As the nitriding treatment, it is preferable to subject the surface of a base material to plasma nitriding treatment because the plasma nitriding treatment makes it difficult for an oxidized layer which deteriorates the adhesiveness between the hard film and the surface of the base material to be generated on the surface of the base material. It is preferable that the hardness of the surface after the nitriding treatment is Hv 1000 or more in Vickers hardness in order to further improve the adhesiveness to the hard film (foundation layer).

It is preferable that a surface roughness Ra of the surface on which the hard film is to be formed is set to 0.05 µm or less. In the case in which the surface roughness Ra exceeds 0.05 µm, the hard film is hardly formed at the distal ends of the projections of the unevenness and a film thickness becomes locally thin.

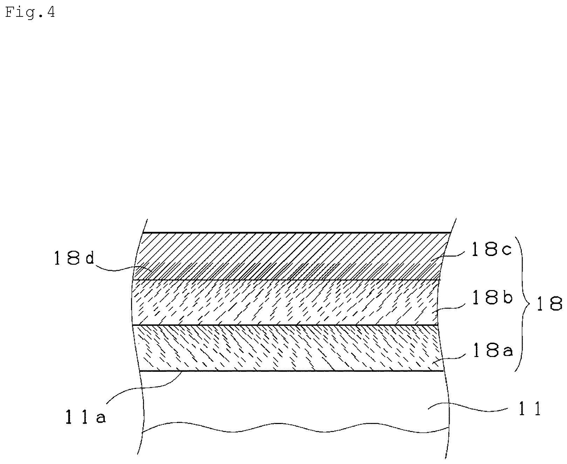

A structure of the hard film will be described with reference to Fig. 4. Fig. 4 is a schematic cross-sectional view illustrating the structure of the hard film 18. As shown in Fig. 4, the hard film 18 has a three-layer structure formed of (1) a foundation layer 18a formed directly on the inner ring raceway surface 11a of the inner ring 11, (2) a mixed layer 18b mainly formed of WC and DLC, disposed on the foundation layer 18a, and (3) a surface layer 18c mainly formed of DLC, disposed on the mixed layer 18b. In the present invention, the structure of the hard film is the three-layer structure, so that a sudden change in the properties (hardness, modulus of elasticity, and the like) can be avoided.

The foundation layer 18a is formed directly on a surface of each of the bearing components served as base materials. The material and the structure of the foundation layer are not especially limited as long as the adhesiveness to the base material is secured. Examples of the material include Cr, W, Ti, and Si. Of these materials, it is preferable that the material contains Cr because of its superior adhesiveness to the bearing component (for example, high carbon chromium bearing steel) served as a base material.

Also considering the adhesiveness of the foundation layer 18a to the mixed layer 18b, the foundation layer 18a is mainly formed of Cr and WC. WC has the hardness and the modulus of elasticity intermediate between those of Cr and DLC, and the concentration of the residual stress is hardly caused after the foundation layer is formed. In particular, it is preferable that the foundation layer 18a has a gradient composition in which the content rate of Cr is decreased and the content rate of WC is increased from a side of the inner ring 11 toward a side of the mixed layer 18b. With this, superior adhesiveness of the foundation layer 18a to both of the inner ring 11 and the mixed layer 18b can be obtained.

The mixed layer 18b is formed as an intermediate layer interposed between the foundation layer and the surface layer. As described above, WC used in the mixed layer 18b has the hardness and the modulus of elasticity intermediate between those of Cr and DLC and makes it difficult for the residual stress to concentrate in the hard film after formed. Since the mixed layer 18b has the gradient composition in which the content rate of WC in the mixed layer is decreased and the content rate of DLC in the mixed layer is increased from a side of the foundation layer 18a toward a side of the surface layer 18c, superior adhesiveness of the mixed layer 18b to both of the foundation layer 18a and the surface layer 18c can be obtained. The mixed layer 18b has a structure in which WC and DLC are physically connected to each other, so that the break or the like in the mixed layer 18b can be prevented. Further, the content rate of DLC is high at the side of the surface layer 18c, and thereby superior adhesiveness of the mixed layer 18b to the surface layer 18c can be obtained.

In the mixed layer 18b, DLC having high non-adhesiveness can be connected to the foundation layer 18a owing to an anchoring effect caused by the presence of WC. As described in the examples below, in order to improve peeling resistance in contacting with other component in an inferior lubrication state causing sliding, it is important that a content of hydrogen in the mixed layer is made less to some extent. The content of hydrogen in the mixed layer is set to less than 10 atom%. By setting the content of hydrogen in this range, the peeling of the hard film can be prevented even in a boundary lubrication condition causing rolling and sliding contact. In a case in which the content of hydrogen in the mixed layer exceeds 10 atom%, relatively soft DLC exists in the mixed layer served as an intermediate layer, and thereby the hard film might peel off easily in the condition described above. Further, in order to improve a fatigue property in rolling contacting, it is preferable that hydrocarbon-based gas is used together as carbon supply source for DLC to set the content of hydrogen in the range described above including slight hydrogen.

Here, "the content of hydrogen (atom%) in the mixed layer" in the present invention can be calculated by a known analytical method. For example, the content of hydrogen in the mixed layer can be acquired by the GDS analysis (Glow discharge optical emission spectrometry). The GDS analysis can acquire the relationship between a depth direction and element content. Quantification can be executed by a calibration curve for each element. The calibration curve for the amount of hydrogen can be generated using the ERDA analysis (Elastic recoil detection analysis) that can measure the absolute amount of the hydrogen. The output value of the amount of hydrogen in the GDS analysis is different depending on a material of a specimen, and therefore it is necessary that the calibration curve for the amount of hydrogen is generated for each of DLC and WC that form the mixed layer (WC/DLC) . Specimens having different amounts of hydrogen are formed by adjusting an introduction amount of the hydrocarbon-based gas in a condition corresponding to a film forming condition of the mixed layer (WC/DLC) for each of a DLC single layer film specimen and a WC single layer specimen. And then the specimens are subjected to the ERDA analysis and the GDS analysis, and the relationship (calibration curve) between the output value of the amount of hydrogen in the GDS analysis and the amount of hydrogen (atom%) measured in the ERDA analysis is acquired. Since the content of hydrogen acquired using the DLC calibration curve for the amount of hydrogen and the content of hydrogen acquired using the WC calibration curve for the amount of hydrogen are different from each other, the content of hydrogen (atom%) corresponding to any output value of the amount of hydrogen can be acquired by calculating the average of the contents of hydrogen acquired using both of the calibration curves.

The surface layer 18c is mainly formed of DLC. It is preferable that the surface layer 18c has a relaxing layer 18d at a side of the mixed layer 18b. The relaxing layer is formed to avoid a sudden change of the parameters (introduction amount of hydrocarbon-based gas, vacuum degree, and bias voltage) relating to a film forming condition in a case in which the parameters for the mixed layer 18b and the parameters for the surface layer 18c are different from each other. The relaxing layer is formed by continuously or stepwise changing at least one of the parameters. More specifically, a parameter relating to the film forming condition at a time when the outermost surface of the mixed layer 18b is formed is set as a starting point, and a parameter relating to a final film forming condition of the surface layer 18c is set as a termination point. Each of the parameters is changed continuously or stepwise within this range. With this, there is no sudden difference between the properties (hardness, modulus of elasticity, and the like) of the mixed layer 18b and those of the surface layer 18c and thus further superior adhesiveness therebetween can be obtained. By increasing the bias voltage continuously or stepwise, a component rate of a diamond structure (sp³) in a DLC structure is increased rather than a component rate of a graphite structure (sp²) in the DLC structure, and thereby the hardness of the layers becomes gradient (rises).

It is preferable to set the thickness of the hard film 18 (total of three layers) to 0.5-3.0 µm. When the thickness of the hard film is less than 0.5 µm, there are cases in which the hard film is inferior in its wear resistance and mechanical strength. When the thickness of the hard film is more than 3.0 µm, it is liable to peel off the surface of the base material. It is also preferable to set the ratio of the thickness of the surface layer 18c to that of the hard film 18 to not more than 0.8. When the above-described ratio exceeds 0.8, the gradient composition for physically connecting WC and DLC in the mixed layer 18b to each other is liable to be uncontinuous, and thereby the adhesiveness of the mixed layer 18b might be deteriorated.

By adopting the hard film 18 of the three layers having the foundation layer 18a, the mixed layer 18b, and the surface layer 18c, superior peeling resistance can be obtained.

The hard film having the above-described structure and properties is formed on the double-row self-aligning roller bearing of the present invention, so that the hard film can be prevented from wearing and peeling off even in a case in which the load caused by rolling and sliding contact is applied to the hard film when in use. Consequently, even in a severe lubrication state, the damage of the raceway surface and the like can be suppressed and thereby the lifetime thereof can be made longer. In a rolling bearing in which grease has been sealed, when a newly formed metal surface is exposed due to the damage of the raceway surface or the like, the deterioration of the grease is accelerated by catalytic action. While, in the double-row self-aligning roller bearing according to the present invention, the damage of the raceway surface or the rolling contact surface caused by metal contact can be prevented by the hard film and the deterioration of the grease can be also prevented.

Hereinafter, a forming method of the hard film according to the present invention will be described. The hard film is obtained by forming the foundation layer 18a, the mixed layer 18b, and the surface layer 18c in this order on a surface of the bearing component on which the hard film is to be formed.

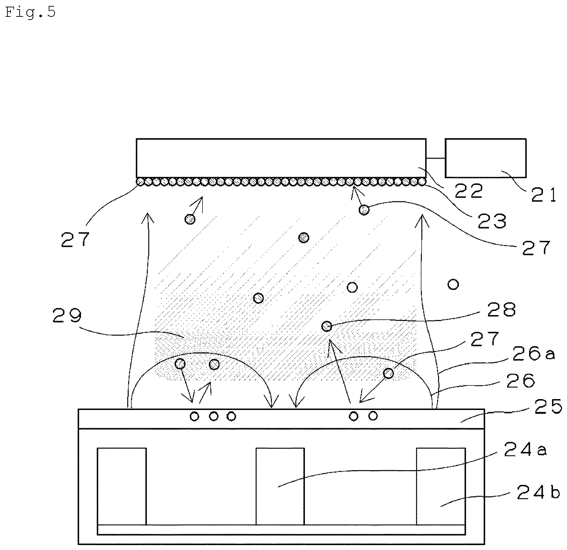

It is preferable that the surface layer 18c is formed by using a UBMS apparatus that uses Ar gas as a sputtering gas. The film forming principle of a UBMS method to be carried out by using the UBMS apparatus is described with reference to a schematic view shown in Fig. 5. In Fig. 5, a base material 22 corresponds to each of the inner ring, the outer ring, and the rolling element, which are the bearing components on which the hard film is to be formed, however the base material is illustrated as a flat plate. As shown in Fig. 5, the UBMS apparatus has an inner magnet 24a and an outer magnet 24b having different magnetic properties in the central portion of a round target 25 and the peripheral portion thereof. While a high-density plasma 29 is being formed in the neighborhood of the target 25, a part 26a of magnetic field lines 26 generated by the magnets 24a and 24b reaches the neighborhood of a base material 22 connected to a bias power source 21. An effect that Ar plasma generated along the magnetic field lines 26a in sputtering diffuses to the neighborhood of the base material 22 can be obtained. In the UBMS method, a dense film (layer) 23 can be formed owing to an ion assist effect that Ar ions 27 and electrons allow ionized targets 28 to reach the base material 22 along the magnetic field lines 26a which reach the neighborhood of the base material 22 more than normal sputtering methods.

The surface layer 18c is formed by the UBMS apparatus in such a way that carbon atoms generated from a carbon supply source using the graphite target and the hydrocarbon-based gas in combination is deposited on the mixed layer 18b in a condition in which a ratio of the amount of the hydrocarbon-based gas to be introduced into the UBMS apparatus is set to 1-10 to 100 which is the amount of the Ar gas to be introduced thereinto. In addition, it is preferably that the vacuum degree inside the apparatus is set to 0.2-0.8 Pa. These preferable conditions are described below.

By using the graphite target and the hydrocarbon-based gas in combination as the carbon supply source, the hardness and the modulus of elasticity of the DLC film can be adjusted. As the hydrocarbon-based gas, methane gas, acetylene gas, and benzene can be adopted. Although the hydrocarbon-based gas is not especially limited, the methane gas is preferable from the viewpoint of cost and handleability. By setting a ratio of the amount of the hydrocarbon-based gas to be introduced into the UBMS apparatus to 1-10 (parts by volume) to 100 (parts by volume) which is the amount of the Ar gas to be introduced thereinto (into film forming chamber), the adhesiveness of the surface layer 18c to the mixed layer 18b can be improved without deteriorating the wear resistance of the surface layer 18c.

The vacuum degree inside the UBMS apparatus (film forming chamber) is set to preferably 0.2-0.8 Pa as described above. The vacuum degree is set to more favorably 0.25-0.8 Pa. When the vacuum degree inside the UBMS apparatus is less than 0.2 Pa, since the amount of the Ar gas inside the chamber is small, the Ar plasma might not be generated and thus the film might not be formed. When the vacuum degree inside the UBMS apparatus is more than 0.8 Pa, a reverse sputtering phenomenon might be caused easily and thus the wear resistance of the formed film might be deteriorated.

It is preferable that the bias voltage to be applied to the bearing component served as a base material is set to 50-150 V. The bias voltage is applied to the base material in such a way that the bias voltage is minus relative to the earth potential. For example, the bias voltage of 100 V means that the bias potential of the base material is -100 V relative to the earth potential.

It is preferable that the foundation layer 18a and the mixed layer 18b are also formed by using the UBMS apparatus that uses Ar gas as the sputtering gas. In a case in which the foundation layer 18a is mainly formed of Cr and WC, a Cr target and a WC target are used in combination as the target 25. In forming the mixed layer 18b, (1) the WC target, (2) a graphite target, and the hydrocarbon-based gas if needed, are used.

In a case in which the foundation layer 18a has the gradient composition of Cr and WC described above, the foundation layer 18a is formed by continuously or stepwise increasing sputtering power to be applied to the WC target and continuously or stepwise decreasing the sputtering power to be applied to the Cr target. With this, the layer having a structure in which the content rate of Cr is decreased and the content rate of WC is increased toward a side of the mixed layer 18b can be obtained.

The mixed layer 18b is formed by continuously or stepwise increasing the sputtering power to be applied to the graphite target served as the carbon supply source and continuously or stepwise decreasing the sputtering power to be applied to the WC target. With this, the layer having the gradient composition in which the content rate of WC is decreased and the content rate of DLC is increased toward a side of the surface layer 18c.

In order to set the content of hydrogen in the mixed layer 18b in the range described above (less than 10 atom%), a ratio of the introduction amount of the hydrocarbon-based gas is set to be small by using only the graphite target or the combination of the graphite target and the hydrocarbon-based gas as the carbon supply source. Specifically, in a case in which the graphite target and the hydrocarbon-based gas are used in combination, the ratio of the introduction amount of the hydrocarbon-based gas is set to less than 2.5 (parts by volume), preferably 0.5-2 (parts by volume), and more preferably 1-1.6 (parts by volume) to 100 (parts by volume) which is the amount of the Ar gas to be introduced to the UBMS apparatus (film forming chamber).

The vacuum degree inside the UBMS apparatus (film forming chamber) in forming the mixed layer 18b is set to preferably 0.2-1.2 Pa. The bias voltage to be applied to the bearing component, which is the base material, is set to preferably 20-100 V. By setting the vacuum degree and the bias voltage in such ranges, the peeling resistance can be improved.

### EXAMPLES

As the hard film formed in the rolling bearing according to the present invention, the hard film was formed on a predetermined base material, and the properties of the hard film were evaluated. The peeling resistance was evaluated through a rolling and sliding test using a two-cylinder test machine.

The specimen, the UBMS apparatus, and the sputtering gas used for the evaluation of the hard films are as described below.
(1) Specimen property: quenched and tempered SUJ2 having the hardness of 780 Hv
(2) Specimen: mirror-polished (0.02 pmRa) SUJ2 ring (φ40 × L12 no sub-curvature) with a DLC film formed on a sliding surface thereof in each condition
(3) Mating material: grinding-finished (0.7 pmRa) SUJ2 ring (φ40 × L12 sub-curvature of 60)
(4) UBMS apparatus: UBMS202 produced by Kobe Steel, Ltd.
(5) Sputtering gas: Ar gas

The condition of forming the foundation layer is described below. The inside of a film forming chamber is vacuumed to approximately 5 × 10⁻³ Pa, and the specimen served as a base material is baked by a heater. After the surface of the base material is etched by means of Ar plasma, a Cr/WC gradient layer in which the composition ratio between Cr and WC is gradient such that the content of Cr is much at a side of the base material and the content of WC is much at a side of the surface is formed by the UBMS method while adjusting the sputtering power applied to the Cr target and the WC target.

The condition of forming the mixed layer is described below. Similar to the foundation layer, the mixed layer is formed by the UBMS method. The mixed layer is formed as a WC/DLC gradient layer in which the composition ratio between WC and DLC is gradient such that the content of WC is much at a side of the foundation layer and the content of DLC is much at a side of the surface layer while supplying methane gas, which is a hydrocarbon-based gas, and adjusting the sputtering power applied to the WC target and the graphite target. A specific condition of forming the mixed layer is shown in Table 1. The content of hydrogen (atom%) in the mixed layer is acquired by the method described above using the GDS analysis (Glow discharge optical emission spectrometry). The results are also shown in Table 1.

The condition of forming the surface layer is as shown in each of Tables.

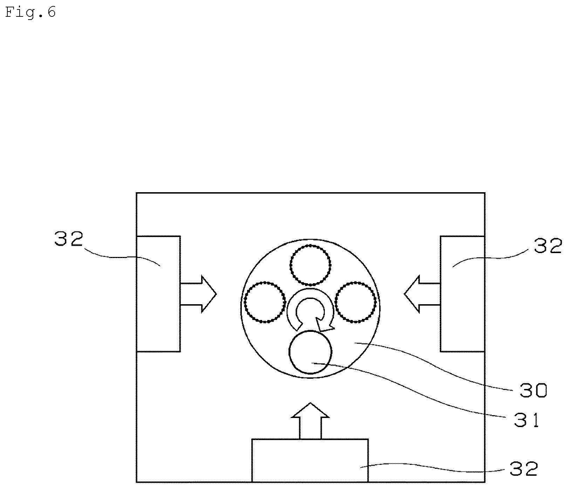

Fig. 6 is a schematic view illustrating the UBMS apparatus. As shown in Fig. 6, the UBMS apparatus has a UBMS function capable of controlling the property of a film deposited on a base material 31 arranged on a disk 30 by increasing a plasma density in the neighborhood of the base material 31 to enhance the ion assist effect (see Fig. 5), with a sputtering vaporization source material (target) 32 being subjected to an unbalanced magnetic field. This apparatus is capable of forming a composite film that combines any UBMS films (including a gradient composition), on the base material. In this example, the foundation layer, the mixed layer, and the surface layer are formed as the UBMS film on the ring served as the base material.

### Examples 1 to 3 and Comparative examples 1 to 5

After the base materials shown in Table 1 were ultrasonically cleaned with acetone, the base materials were dried. Thereafter, each of the base materials was mounted on the UBMS apparatus to form the foundation layer and the mixed layer in the film forming condition described above. The DLC film, which is the surface layer, was formed on each of the mixed layers in the film forming condition shown in Table 1 to obtain a specimen having a hard film. "Vacuum degree" shown in Table 1 means a vacuum degree inside the film forming chamber of the apparatus described above. The rolling and sliding test using the two-cylinder test machine described below was performed for each of the obtained specimens. The results are also shown in Table 1.

### <Rolling and sliding test using two-cylinder test machine>

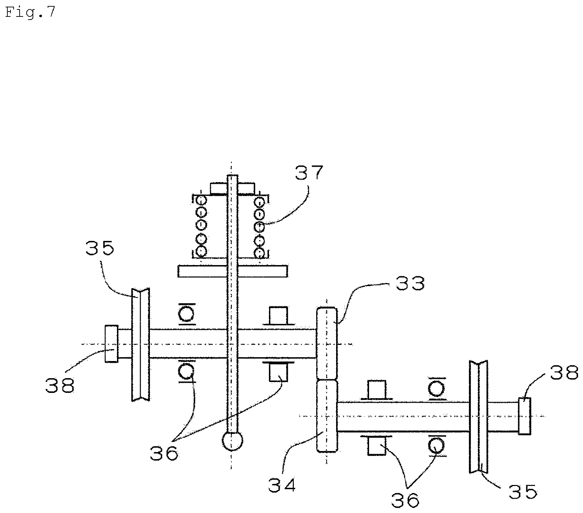

A peeling resistance test was performed for each of the obtained specimens by using the two-cylinder test machine shown in Fig. 7. The two-cylinder test machine is provided with a driving side specimen 33, and a driven side specimen 34 brought into rolling and sliding contact with the driving side specimen 33. Respective specimens (rings) are supported by support bearings 36, and a load is applied to the respective specimens by a loading spring 37. Fig. 7 also shows a driving pulley 35 and a non-contact rotation speed indicator 38. The roughness of the mating material is made large to promote the peeling of the hard film. The viscosity of the lubrication oil is made low to be boundary lubrication. The sliding is caused by the rotation difference. The peeling lifetime is evaluated as the time (h) until the peeling of the hard film is caused. A specific test condition is described below.

### (Test condition)

Lubrication oil: VG1.5 equivalent oil (including additives), dropped to supply oil
Oil temperature: 40-50°C
Maximum contact surface pressure: 2.7 GPa
Rotation speed: (specimen side) 270 minute⁻¹, (mating material side) 300 minute⁻¹
Relative sliding speed: 0.06 m/s
Oil film parameter: 0.006
Close time: 48 hours

**Table 1**

| | | Examples | | | Comparative examples | | | | |
|---|---|---|---|---|---|---|---|---|---|
| | | 1 | 2 | 3 | 1 | 2 | 3 | 4 | 5 |
| Base material | | SUJ2 | SUJ2 | SUJ2 | SUJ2 | SUJ2 | SUJ2 | SUJ2 | SUJ2 |
| Material of foundation layer ²⁾ | | Cr/WC | Cr/WC | Cr/WC | Cr/WC | Cr/WC | Cr/WC | Cr/WC | Cr/WC |
| Material of mixed layer ³⁾ | | WC/DLC | WC/DLC | WC/DLC | WC/DLC | WC/DLC | WC/DLC | WC/DLC | WC/DLC |
| Content of hydrogen in mixed layer (atom%) | | 2.1 | 8.6 | 9.3 | 10.8 | 13.2 | 18.9 | 26.3 | 44.8 |

| Film forming condition of mixed layer | | | | | | | | | |
|---|---|---|---|---|---|---|---|---|---|
| | Introduction ratio of methane gas ¹⁾ | 0 | 1 | 1.6 | 2.5 | 5 | 10 | 20 | 40 |
| | Vacuum degree (Pa) | 0.8 | 0.8 | 0.8 | 0.8 | 0.8 | 0.8 | 0.8 | 0.8 |
| | Bias voltage (negative) (V) | 50 | 50 | 50 | 50 | 50 | 50 | 50 | 50 |

| Film forming condition of surface layer | | | | | | | | | |
|---|---|---|---|---|---|---|---|---|---|
| | Introduction ratio of methane gas ¹⁾ | 3.0 | 3.0 | 3.0 | 3.0 | 3.0 | 3.0 | 3.0 | 3.0 |
| | Vacuum degree (Pa) | 0.25 | 0.25 | 0.25 | 0.25 | 0.25 | 0.25 | 0.25 | 0.25 |
| | Bias voltage (negative) (V) | 100 | 100 | 100 | 100 | 100 | 100 | 100 | 100 |

| Two-cylinder rolling and sliding test | | | | | | | | | |
|---|---|---|---|---|---|---|---|---|---|
| | Hard film peeling lifetime (h) | 48 | 48 | 17.6 | 1.9 | 1.1 | 0.8 | 0.5 | 0.3 |

| | | | | | | | | | |
|---|---|---|---|---|---|---|---|---|---|
| 1) Introduction ratio corresponds to a ratio of an introduction amount (parts by volume) of methane gas to an introduction amount of 100 (parts by volume) of Ar gas. 2) This layer corresponds to the foundation layer in the present invention. In a case in which two components are mixed, it shows "first component / second component". 3) This layer corresponds to the mixed layer in the present invention. In a case in which two components are mixed, it shows "first component / second component". | | | | | | | | | |

The base materials and the film forming conditions of the surface layer adopted in Examples and Comparative examples are identical to each other. The average of the hardness of the surface layer is approximately 29 GPa. As shown in Table 1, when the content of hydrogen in forming the mixed layer is changed, the peeling lifetime in the two-cylinder rolling and sliding test is apt to be shorter as the content of hydrogen becomes high. The lifetime becomes dramatically shorter when the content of hydrogen is 10.8 atom% or more. It is considered that the presence of the relatively soft DLC having high content of hydrogen in the mixed layer affects the peeling resistance.

### INDUSTRIAL APPLICABILITY

The use condition of the double-row self-aligning roller bearing is likely a severe lubrication state of high load, or inferior lubrication or high sliding speed on the sliding surface or the rolling contact surface of the bearing. The double-row self-aligning roller bearing according to the present invention has, for example, the DLC film formed on the raceway surfaces of the inner ring and the outer ring and the rolling contact surface of the roller, and the double-row self-aligning roller bearing is superior in the peeling resistance of the DLC film even when operated in a severe lubrication state, and thereby the double-row self-aligning roller bearing shows the properties of the DLC itself. Consequently, the double-row self-aligning roller bearing is superior in its seizure resistance, wear resistance, and corrosion resistance. In particular, the double-row self-aligning roller bearing according to the present invention can be suitably applied to a bearing that supports the rotor shaft of the wind power generator.

### REFERENCE SIGNS LIST

- 1:: wind power generator
- 2:: blade
- 3:: rotor shaft
- 4:: nacelle
- 5:: double-row self-aligning roller bearing (bearing)
- 6:: speed increaser
- 7:: generator
- 8:: support base
- 9:: motor
- 10:: speed reducer
- 11:: inner ring
- 12:: outer ring
- 13:: roller
- 14:: cage
- 15:: bearing housing
- 16:: seal
- 17:: revolving seat bearing
- 18:: hard film
- 21:: bias power source
- 22:: base material
- 23:: film (layer)
- 25:: target
- 26:: magnetic field line
- 27:: Ar ion
- 28:: ionized target
- 29:: high-density plasma
- 30:: disk
- 31:: base material
- 32:: sputtering vaporization source material (target)
- 33:: driving side specimen
- 34:: driven side specimen
- 35:: driving pulley
- 36:: support bearing
- 37:: loading spring
- 38:: non-contact rotation speed indicator

## Claims

1. A double-row self-aligning roller bearing (5) comprising:
an inner ring (11);
an outer ring (12) having a raceway surface (12a) formed in a spherical shape;
rollers (13a, 13b) interposed between the inner ring (11) and the outer ring (12) in two rows aligned in an axial direction, each of the rollers (13a, 13b) having an outer circumference formed in a spherical shape along the raceway surface (12a) of the outer ring (12); and
a hard film (18) comprising: a foundation layer (18a) formed directly on a surface of at least one bearing component selected from among the inner ring (11), the outer ring (12), and the rollers (13a, 13b); a mixed layer (18b) formed on the foundation layer (18a) and mainly formed of tungsten carbide and diamond-like carbon; and a surface layer (18c) formed on the mixed layer (18b) and mainly formed of diamond-like carbon,
wherein:
the double-row self-aligning roller bearing (5) is configured to be used such that the hard film (18) is brought into sliding contact or into rolling and sliding contact with other bearing component in a boundary lubrication state; and
the mixed layer (18b) is formed such that a content rate of the tungsten carbide in the mixed layer is continuously or stepwise decreased and a content rate of the diamond-like carbon is continuously or stepwise increased from a side of the foundation layer toward a side of the surface layer (18c);
**characterised in that**
the inner ring (11), the outer ring (12), and the rollers (13a, 13b) are formed of iron-based material; and
the content of the hydrogen in the mixed layer is less than 10 atom%.

2. The double-row self-aligning roller bearing (5) according to claim 1, wherein the surface layer (18c) has a relaxing layer at a side of the mixed layer (18b), and the hardness of the relaxing layer is continuously or stepwise increased from a side of the mixed layer (18b).

3. The double-row self-aligning roller bearing (5) according to claim 1 or 2, wherein the iron-based material is high carbon chromium bearing steel, carbon steel, tool steel, or martensitic stainless steel, and
wherein the foundation layer (18a) is mainly formed of chromium and tungsten carbide.

4. The double-row self-aligning roller bearing (5) according to claim 1, 2, or 3 for supporting a rotor shaft (3) to which a blade (2) of a wind power generator (1) is mounted.

5. The double-row self-aligning roller bearing (5) according to any one preceding claim, wherein the inner ring (11) comprises: an intermediate flange (11d) disposed on the outer circumference of the inner ring (11), between the rollers (13a, 13b) in the two rows, the intermediate flange (11d) being configured to be brought into sliding contact with an end surface at an inner side in the axial direction of each of the rollers (13a, 13b); and small flanges (11b, 11c) disposed at both ends of the outer circumference of the inner ring (11), each of the small flanges (11b, 11c) being configured to be brought into sliding contact with an end surface at an outer side in the axial direction of each of the rollers (13a, 13b), and
wherein the hard film (18) is formed on the outer circumference of the roller in at least one of the two rows.

6. A wind power generator (1) comprising the double-row self-aligning roller bearing (5) according to any one preceding claim.

7. A wind power generation rotor shaft support device comprising one or more bearings disposed in a housing, the bearings being configured to support a rotor shaft (3) to which a blade (2) is mounted,
wherein at least one of the bearings is formed as the double-row self-aligning roller bearing (5) according to any one of claims 1 to 5, and
wherein a part of the double-row self-aligning roller bearing (5), in a row far away from the blade is formed with the hard film (18) to receive a large load compared to a part of the double-row self-aligning roller bearing (5), in a row close to the blade (2) .

8. The use of a double-row self-aligning roller bearing (5) according to any one of claims 1 to 5 in a wind power generator (1) to support a rotor shaft (3) to which a blade (2) of the wind power generator (1) is mounted.

## Patentansprüche

1. Zweireihiges selbstausrichtendes Rollenlager (5), das Folgendes umfasst:
einen Innenring (11),
einen Außenring (12) mit einer kugelförmig ausgebildeten Laufbahnfläche (12a);
Rollen (13a, 13b), die zwischen dem Innenring (11) und dem Außenring (12) in zwei in einer axialen Richtung ausgerichteten Reihen angeordnet sind, wobei jede der Rollen (13a, 13b) einen Außenumfang aufweist, der kugelförmig entlang der Laufbahnfläche (12a) des Außenrings (12) ausgebildet ist; und
einen harten Film (18), der Folgendes umfasst: eine Grundschicht (18a), die direkt auf einer Oberfläche von mindestens einer Lagerkomponente gebildet ist, die aus dem Innenring (11), dem Außenring (12) und den Rollen (13a, 13b) ausgewählt ist; eine Mischschicht (18b), die auf der Grundschicht (18a) gebildet ist und hauptsächlich aus Wolframkarbid und diamantartigem Kohlenstoff gebildet ist; und eine Oberflächenschicht (18c), die auf der Mischschicht (18b) gebildet ist und hauptsächlich aus diamantartigem Kohlenstoff gebildet ist, wobei:
das zweireihige selbstausrichtende Rollenlager (5) für eine derartige Verwendung konfiguriert ist, dass der harte Film (18) in Gleitkontakt oder in Roll- und Gleitkontakt mit einer anderen Lagerkomponente in einem Grenzschmierungszustand gebracht wird; und
die Mischschicht (18b) so ausgebildet ist, dass ein Gehaltsanteil des Wolframkarbids in der Mischschicht kontinuierlich oder schrittweise verringert wird und ein Gehaltsanteil des diamantartigen Kohlenstoffs kontinuierlich oder schrittweise von einer Seite der Grundschicht zu einer Seite der Oberflächenschicht (18c) erhöht wird;
**dadurch gekennzeichnet, dass**
der Innenring (11), der Außenring (12) und die Rollen (13a, 13b) aus einem Material auf Eisenbasis gebildet sind, und
der Gehalt des Wasserstoffs in der Mischschicht weniger als 10 Atom-% beträgt.

2. Zweireihiges selbstausrichtendes Rollenlager (5) nach Anspruch 1, wobei die Oberflächenschicht (18c) eine Entspannungsschicht auf einer Seite der Mischschicht (18b) aufweist und die Härte der Entspannungsschicht kontinuierlich oder schrittweise von einer Seite der Mischschicht (18b) aus erhöht wird.

3. Zweireihiges selbstausrichtendes Rollenlager (5) nach Anspruch 1 oder 2, wobei das Material auf Eisenbasis kohlenstoffreicher Chromlagerstahl, Kohlenstoffstahl, Werkzeugstahl oder martensitischer rostfreier Stahl ist, und
wobei die Grundschicht (18a) hauptsächlich aus Chrom und Wolframkarbid gebildet ist.

4. Zweireihiges selbstausrichtendes Rollenlager (5) nach Anspruch 1, 2 oder 3 zum Stützen einer Rotorwelle (3), an der ein Blatt (2) eines Windkraftgenerators (1) montiert ist.

5. Zweireihiges selbstausrichtendes Rollenlager (5) nach einem vorhergehenden Anspruch, wobei der Innenring (11) Folgendes umfasst: einen Zwischenflansch (11d), der am Außenumfang des Innenrings (11) zwischen den Rollen (13a, 13b) in den beiden Reihen angeordnet ist, wobei der Zwischenflansch (11d) zum In-Gleitkontakt-Bringen mit einer Endfläche an einer Innenseite in der axialen Richtung jeder der Rollen (13a, 13b) konfiguriert ist; und kleine Flansche (11b, 11c), die an beiden Enden des Außenumfangs des Innenrings (11) angeordnet sind, wobei jeder der kleinen Flansche (11b, 11c) zum In-Gleitkontakt-Bringen mit einer Endfläche an einer Außenseite in der axialen Richtung jeder der Rollen (13a, 13b) konfiguriert ist, und
wobei der harte Film (18) auf dem Außenumfang der Rolle in mindestens einer der beiden Reihen ausgebildet ist.

6. Windkraftgenerator (1), der das zweireihige selbstausrichtende Rollenlager (5) nach einem vorhergehenden Anspruch umfasst.

7. Windkraftanlagen-Rotorwellenlagervorrichtung, die ein oder mehrere in einem Gehäuse angeordnete Lager umfasst, wobei die Lager zum Stützen einer Rotorwelle (3) konfiguriert sind, an der ein Blatt (2) montiert ist,
wobei mindestens eines der Lager als das zweireihige selbstausrichtende Rollenlager (5) nach einem der Ansprüche 1 bis 5 ausgebildet ist, und
wobei ein Teil des zweireihigen selbstausrichtenden Rollenlagers (5) in einer Reihe weit entfernt von dem Blatt mit dem harten Film (18) ausgebildet ist, um eine große Last im Vergleich zu einem Teil des zweireihigen selbstausrichtenden Rollenlagers (5) in einer Reihe nahe dem Blatt (2) aufzunehmen.

8. Verwendung eines zweireihigen selbstausrichtenden Rollenlagers (5) nach einem der Ansprüche 1 bis 5 in einem Windkraftgenerator (1) zum Stützen einer Rotorwelle (3), an der ein Blatt (2) des Windkraftgenerators (1) montiert ist.

## Revendications

1. Roulement à rouleaux à auto-alignement à double rangée (5), comprenant :
une bague interne (11) ;
une bague externe (12) comportant une surface de chemin de roulement (12a) formée en une forme sphérique ;
des rouleaux (13a, 13b) agencés entre la bague interne (11) et la bague externe (12) en deux rangées alignées dans une direction axiale, chacun des rouleaux (13a, 13b) ayant une circonférence externe formée en une forme sphérique le long de la surface de chemin de roulement (12a) de la bague externe (12) ; et
un film dur (18) comprenant : une couche de fondation (18a) formée directement sur une surface d'au moins un composant du roulement sélectionné parmi la bague interne (11), la bague externe (12) et les rouleaux (13a, 13b) ; une couche mixte (18b) formée sur la couche de fondation (18a) et composée pour l'essentiel de carbure de tungstène et de carbone de type diamant; et une couche de surface (18c) formée sur la couche mixte (18bmais ) et composée pour l'essentiel de carbone de type diamant, dans lequel :
le roulement à rouleaux à auto-alignement à double rangée (5) est configuré pour être utilisé de sorte que le film dur (18) est mis en contact coulissant ou en contact par roulement ou coulissant avec un autre composant du roulement dans un état limite de lubrification ; et
la couche mixte (18b) est formée de sorte qu'un taux de teneur en carbure de tungstène dans la couche mixte est réduit en continu ou progressivement, et qu'un taux de teneur en carbone de type diamant est accru de manière continu ou progressivement d'un côté de la couche de fondation vers un côté de la couche de surface (18c) ;
**caractérisé en ce que** :
la bague interne (11), la bague externe (12) et les rouleaux (13a, 13b) sont formés à partir d'un matériau à base de fer ; et
la teneur en hydrogène dans la couche mixte est inférieure à 10 % atomique.

2. Roulement à rouleaux à auto-alignement à double rangée (5) selon la revendication 1, dans lequel la couche de surface (18c) comporte une couche de relaxation au niveau d'un côté de la couche mixte (18b), et la dureté de la couche de relaxation est accrue en continu ou progressivement à partir d'un côté de la couche mixte (18b).

3. Roulement à rouleaux à auto-alignement à double rangée (5) selon la revendication 1 ou 2, dans lequel le matériau à base de fer est de l'acier chromifère à haute teneur en carbone, de l'acier au carbone, de l'acier à outils ou de l'acier inoxydable martensitique ; et
dans lequel la couche de fondation (18a) est pour l'essentiel composée de chrome et de carbure de tungstène.

4. Roulement à rouleaux à auto-alignement à double rangée (5) selon la revendication 1, 2 ou 3 pour soutenir un arbre de rotor (3) sur lequel est montée une pale (2) d'un générateur d'énergie éolienne (1).

5. Roulement à rouleaux à auto-alignement à double rangée (5) selon l'une quelconque des revendications précédentes, dans lequel la bague interne (11) comprend : une bride intermédiaire (11d) disposée sur la circonférence externe de la bague interne (11), entre les rouleaux (13a, 13b) dans les deux rangées, la bride intermédiaire (11d) étant configurée pour être mise en contact coulissant avec une surface d'extrémité au niveau d'un côté interne, dans la direction axiale de chacun des rouleaux (13a, 13b) ; et des petites brides (11b, 11c) disposées au niveau des deux extrémités de la circonférence externe de la bague interne (11), chacune des petites brides (11b, 11c) étant configurée pour être mise en contact coulissant avec une surface d'extrémité au niveau d'un côté externe, dans la direction axiale de chacun des rouleaux (13a 13b) ; et
dans lequel le film dur (18) est formé sur la circonférence externe du rouleau dans au moins une des deux rangées.

6. Générateur d'énergie éolienne (1), comprenant le roulement à rouleaux à auto-alignement à double rangée (5) selon l'une quelconque des revendications précédentes.

7. Dispositif de soutien d'arbre de rotor de générateur d'énergie éolienne comprenant un ou plusieurs roulements disposés dans un boîtier, les roulements étant configurés pour soutenir un arbre de rotor (3) sur lequel est montée une pale (2) ;
dans lequel au moins un des roulements est formé en tant que roulement à auto-alignement à double rangée (5) selon l'une quelconque des revendications 1 à 5 ; et
dans lequel une partie du roulement à rouleaux à auto-alignement à double rangée (5), dans une rangée très à l'écart de la pale, est formée avec le film dur (18) pour recevoir une grande charge par rapport à une partie du roulement à rouleaux à auto-alignement à double rangée (5), dans une rangée proche de la pale (2).

8. Utilisation d'un roulement à rouleaux à auto-alignement à doble rangée (5) selon l'une quelconque des revendications 1 à 5 dans un générateur d'énergie éolienne (1) pour soutenir un arbre de rotor (3) sur lequel est montée une pale (2) du générateur d'énergie éolienne (1).
